# EUROPEAN PATENT APPLICATION

(11) **EP 4 671 899 A1**
(43) Date of publication of application: **31.12.2025**
(21) Application number: 25183519.5
(22) Date of filing: 18.06.2025
(51) Int. Cl.: G05D 1/246, G05D 1/648

(54) **ASSIST SYSTEM FOR WORKING MACHINE AND METHOD OF ASSISTING WORKING MACHINE**

(30) Priority: 26.06.2024 JP 2024103197
(71) Applicant: KUBOTA CORPORATION, Osaka-shi, Osaka 556-8601 (JP)
(72) Inventor: SHINOZAKI, Mitsuru, SAKAI-SHI, OSAKA, 5900908 (JP); KITAJIMA, Toshihiro, SAKAI-SHI, OSAKA, 5900908 (JP)
(74) Representative: Cabinet Beau de Loménie

(57) **Abstract**

An assist system (S) for a working machine (1) includes one or more sensors (25) provided in or on a working machine (1) to sense a surrounding area of the working machine (1) to obtain a sensing result, the working machine (1) being configured to perform work while traveling, and an updater (20c) configured or programmed to perform an update process to update environmental map information based on a portion, of the sensing result obtained during work performed by the working machine (1), that relates to an area having been worked by the working machine (1). The assist system (S) may further include a position estimator (20a) configured or programmed to estimate a position of the working machine (1) based on the sensing result from the one or more sensors (25) and based on the environmental map information updated by the updater (20c). The position estimator (20a) may be configured or programmed to estimate the position based on a portion, of the sensing result obtained during work performed by the working machine (1), that relates to an area having not been worked by the working machine (1).

## Description

### BACKGROUND OF THE INVENTION

### Field of the Invention

The present invention relates to assist systems for working machines and methods of assisting working machines.

### Description of the Related Art

An autonomous traveling system disclosed in Japanese Unexamined Patent Application Publication No. 2022-146457 includes a traveling machine body equipped with a working device, a distance measurement sensor that measures the distance to at least a portion of surroundings of the machine body, a machine body position estimator that calculates a machine body position by processing a ranging signal from the distance measurement sensor by using a Simultaneous Localization and Mapping (SLAM) algorithm, and an autonomous traveling controller that causes the traveling machine body to autonomously travel based on the machine body position.

### SUMMARY OF THE INVENTION

In the autonomous traveling system disclosed in Japanese Unexamined Patent Application Publication No. 2022-146457, autonomous traveling is achieved based on a machine body position calculated by processing a ranging signal by a SLAM algorithm. However, in the case where a map is updated by sequentially rewriting reference point cloud data while regarding input point cloud data at a machine body position as reference point cloud data every time the machine body position is calculated (estimated) by scan matching to perform more accurate position estimation, a processing load on hardware sometimes increases. On the other hand, in the case where the map update is not performed, there is a risk of decrease in accuracy of position estimation since an environment such as a shape of a worksite such as an agricultural field is changed by work and thus the actual worksite and environmental map information are deviated.

The present invention was accomplished to solve such a problem of the related art, and an object of the present invention is to provide a working machine assist system and method that can appropriately update environmental map information for position estimation.

An assist system for a working machine according to an example embodiment of the present invention includes one or more sensors provided in or on a working machine to sense a surrounding area of the working machine to obtain a sensing result, the working machine being configured to perform work while traveling, and an updater configured or programmed to perform an update process to update environmental map information based on a portion, of the sensing result obtained during work performed by the working machine, that relates to an area having been worked by the working machine.

The assist system may further include a position estimator configured or programmed to estimate a position of the working machine based on the sensing result from the one or more sensors and based on the environmental map information updated by the updater. The position estimator may be configured or programmed to estimate the position based on a portion, of the sensing result obtained during work performed by the working machine, that relates to an area having not been worked by the working machine.

The updater may be configured or programmed to perform the update process based on a portion, of the sensing result obtained during work performed by the working machine, that relates to an area on an opposite side of a working device of the working machine from an area ahead of the working device in a direction of travel.

The assist system may further include a position estimator configured or programmed to estimate a position of the working machine based on the sensing result from the one or more sensors and based on the environmental map information updated by the updater. The position estimator may be configured or programmed to estimate the position based on a portion, of the sensing result obtained during work performed by the working machine, that relates to the area ahead of the working device in the direction of travel.

The updater may be configured or programmed to perform the update process according to the working device attached to the working machine and/or work performed by the working device.

The updater may be configured or programmed to perform the update process in a case that the working device performs work that possibly changes a shape of a worksite, and not perform the update process in a case that the working device performs work that does not change the shape of the worksite.

The updater may be configured or programmed to perform the update process including a first process to determine a portion of the environmental map information that relates to an area to be worked by the working machine, and a second process to re-register data for the portion determined in the first process based on the sensing result.

The updater may be configured or programmed to perform the first process based on whether a working device of the working machine is in a working state in which the working device performs work or in a non-working state in which the working device does not perform work.

The updater may be configured or programmed to perform the first process when the working device is in the working state, and not perform the first process when the working device is in the non-working state.

The updater may be configured or programmed to perform the first process including deleting data from the portion of the environmental map information that relates to the area to be worked by the working machine, and perform the second process including, based on the sensing result, re-registering data for the portion of the environmental map information in which data deletion was performed in the first process.

The updater may be configured or programmed to, in a case that the working machine travels back and forth between a first edge and a second edge of a worksite, update the environmental map information upon each travel of the working machine from one of the first edge and the second edge to the other.

The updater may be configured or programmed to, in a case that the working machine travels back and forth between a first edge and a second edge of a worksite, perform the first process including deleting data from the portion of the environmental map information that relates to the area to be worked by the working machine as the working machine travels, and perform the second process upon each travel of the working machine from one of the first edge and the second edge to the other.

The assist system may further include a position estimator configured or programmed to estimate a position of the working machine based on the sensing result from the one or more sensors and based on the environmental map information updated by the updater. The one or more sensors may include one or more ranging sensors to measure a distance to at least a portion of surroundings of the working machine. The position estimator may be configured or programmed to estimate the position based on one or more ranging signals from the one or more ranging sensors, based on the environmental map information updated by the updater, and based on a simultaneous localization and mapping (SLAM) algorithm.

The assist system may further include a position estimator configured or programmed to estimate a position of the working machine based on the sensing result from the one or more sensors and based on the environmental map information updated by the updater, and a controller configured or programmed to control travel of the working machine based on the position of the working machine estimated by the position estimator.

The assist system may further include a position estimator configured or programmed to estimate a position of the working machine based on the sensing result from the one or more sensors and based on the environmental map information updated by the updater, and a display to display the position of the working machine estimated by the position estimator.

A method of assisting a working machine according to an example embodiment of the present invention includes a first step including causing one or more sensors in or on a working machine to sense a surrounding area of the working machine to obtain a sensing result, the working machine being operable to travel and work, and a second step including causing an updater to update environmental map information based on a portion, of the sensing result obtained by the one or more sensors in the first step, that relates to an area having been worked by the working machine.

With an assist system for a working machine and a method of assisting a working machine as described above, it is possible to appropriately update environmental map information for position estimation.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is an overall view of an assist system for a working machine.
FIG. 2 is a schematic side view illustrating the working machine.
FIG. 3 is a schematic plan view illustrating the working machine.
FIG. 4 is a perspective view of a position changer.
FIG. 5 illustrates an example of a sensing range of a sensor provided in or on the working machine.
FIG. 6 illustrates a worked area.
FIG. 7 illustrates a scheduled traveling route.
FIG. 8 illustrates determination of a working range at each location (each time point) in a first process.
FIG. 9 illustrates update of the working range (worked area) at each location (each time point) in a second process.
FIG. 10 illustrates update of the working range (worked area) at each location (each time point) in a second process according to a variation.
FIG. 11 is a flowchart illustrating an example of position estimation performed by the position estimator and an update process performed by an updater.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

An embodiment of the present invention is described below with reference to the drawings.

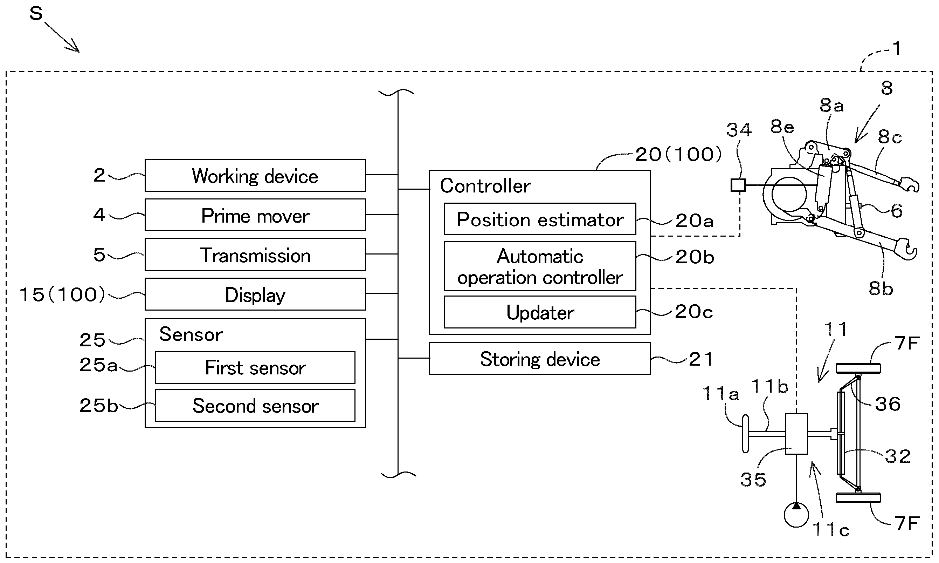

FIG. 1 is an overall view of an assist system S for a working machine 1 according to the present embodiment. The assist system S for the working machine 1 is a system that estimates a position of the working machine 1 based on a sensing result from one or more sensors 25 provided in or on the working machine 1 and environmental map information and assists traveling and/or work of the working machine 1 based on the estimated position of the working machine 1. First, the working machine 1 is described.

The working machine 1 is a vehicle that can perform work while traveling. In the present embodiment, the working machine 1 is a tractor including a traveling vehicle body 3 (machine body) to which a working device 2 (implement) is attachable. Note, however, that the working machine 1 can be any vehicle that can perform work while traveling and is not limited to a tractor. For example, the working machine 1 may be an agricultural machine such as a combine or a rice planter or a construction machine such as a compact track loader or a backhoe.

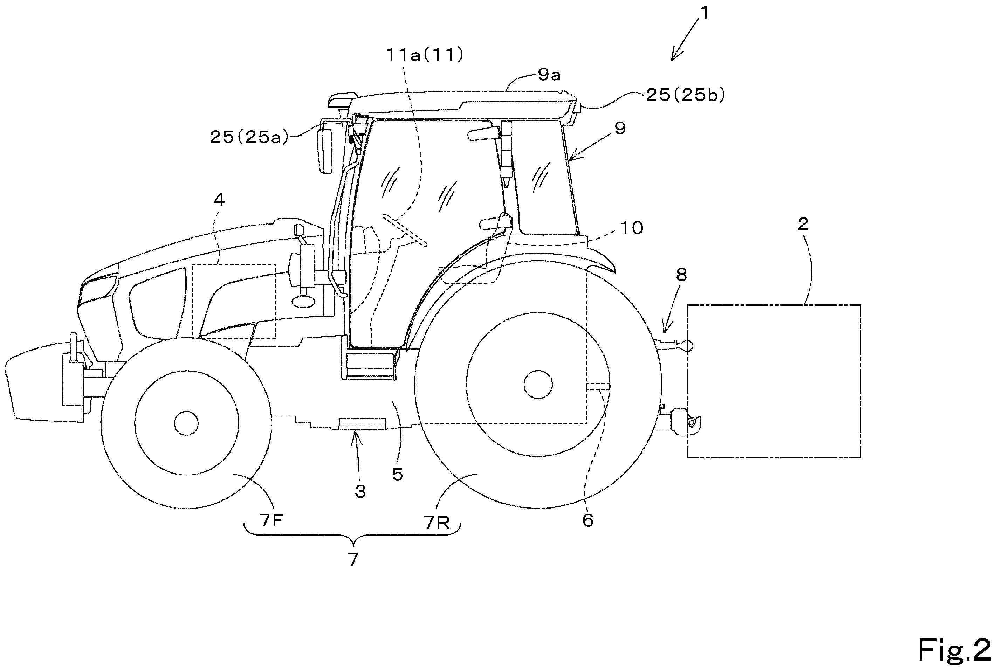

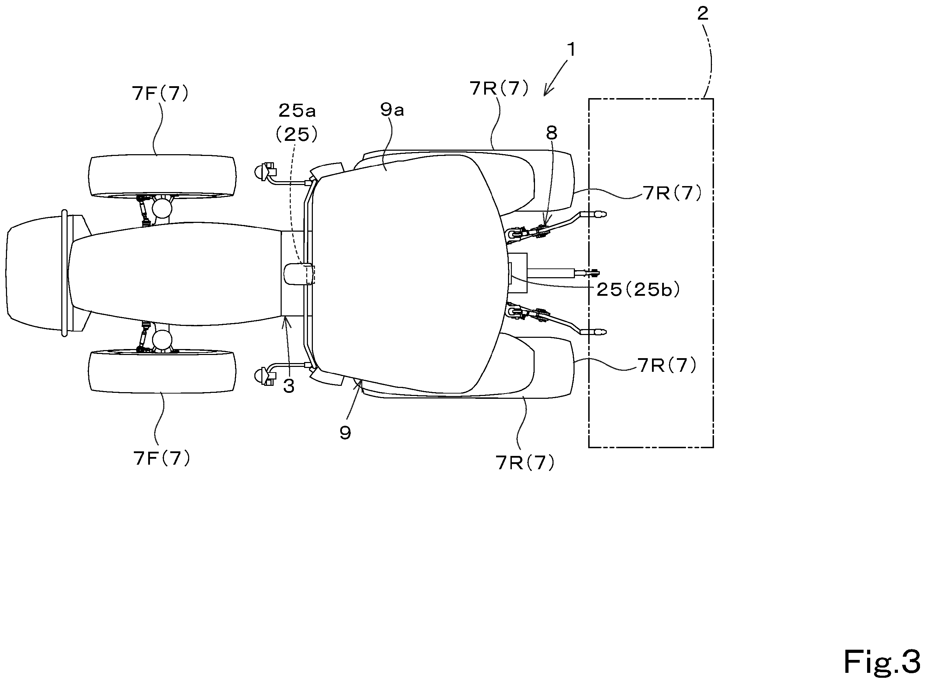

FIG. 2 is a schematic side view illustrating the working machine 1. FIG. 3 is a schematic plan view illustrating the working machine 1. In the description of the present embodiment, a direction (a leftward direction in FIGS. 2 and 3) which a user sitting on an operator's seat 10 of the working machine 1 faces is referred to as a forward direction, and an opposite direction (a rightward direction in FIGS. 2 and 3) is referred to as a rearward direction. Furthermore, a left side viewed from a user's point of view (the near side in FIG. 2, the lower side in FIG. 3) is referred to as a leftward direction, and a right side viewed from the user's point of view (the far side in FIG. 2, the upper side in FIG. 3) is referred to as a rightward direction. A horizontal direction orthogonal to a front-rear direction is referred to as a width direction.

As illustrated in FIGS. 2 and 3, the working machine 1 includes the traveling vehicle body 3 including a traveling device 7, a prime mover 4, and a transmission 5. The traveling device 7 gives propelling force to the traveling vehicle body 3 by being driven. The traveling device 7 is a wheeled traveling device 7 whose front wheel 7F and rear wheel 7R are tires. A pair of front wheels 7F are provided apart from each other in the width direction, and a pair of rear wheels 7R are provided apart from each other in the width direction. As another example, the traveling device 7 whose front wheel 7F and/or rear wheel 7R are crawlers may be used. The traveling vehicle body 3 can travel forward and backward by drive of the traveling device 7.

The prime mover 4 is provided in a front portion of the traveling vehicle body 3. The prime mover 4 is, for example, a diesel engine. As another example, the prime mover 4 may be another internal-combustion engine such as a gasoline engine, an electric motor, or the like.

The transmission 5 can speed-change power output by the prime mover 4 by switching a transmission stage to switch propelling force of the traveling device 7 and can change a switching state of the traveling device 7 (switching to forward traveling or rearward traveling of the traveling device 7). The transmission 5 transmits power of the prime mover 4 to the PTO shaft 6. The PTO shaft 6 is an output shaft that is connected to the working device 2 and thus drives the working device 2.

A protection mechanism 9 for protecting the operator's seat 10 is provided on an upper portion of the traveling vehicle body 3. The protection mechanism 9 is, for example, a cabin that surrounds the operator's seat 10, and the operator's seat 10 is provided in the cabin 9. Note that the protection mechanism 9 is not limited to the cabin 9 and may be a canopy or a ROPS standing behind the operator's seat 10.

The working device 2 is attached to the traveling vehicle body 3. In the tractor of the present embodiment, the working device 2 is detachably attached to the traveling vehicle body 3. Specifically, a coupler 8 to and from which the working device 2 is attachable and detachable is provided on a front portion and/or a rear portion of the traveling vehicle body 3. In the example illustrated in FIGS. 2 and 3, the coupler 8 is provided on the rear portion of the traveling vehicle body 3. Accordingly, the working machine 1 can tow the working device 2 coupled to the coupler 8 by drive of the traveling device 7.

In FIGS. 2 and 3, a position changer using a three-point linkage is illustrated as the coupler 8. The position changer 8 is a raising/lowering device that changes relative position of the traveling vehicle body 3 and the working device 2 by raising or lowering the working device 2 with respect to the traveling vehicle body 3. The position changer 8 using a three-point linkage is described in detail below.

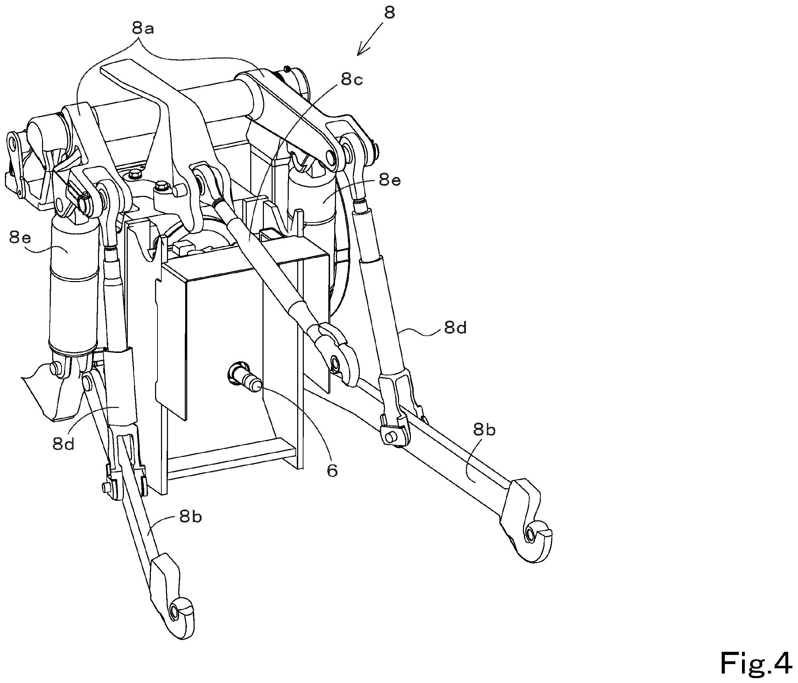

FIG. 4 is a perspective view of the position changer 8 viewed from a rear side. The position changer 8 includes a lift arm 8a, a lower link 8b, a top link 8c, a lift rod 8d, and a lift cylinder 8e.

A front end portion of the lift arm 8a is supported on an upper rear portion of a case (transmission case) in which the transmission 5 is stored so as to be swingable up or down.

The lift arm 8a is swung (raised or lowered) by drive of the lift cylinder 8e. The lift cylinder 8e is a hydraulic cylinder. As illustrated in FIG. 1, the lift cylinder 8e is connected to a hydraulic pump with a control valve 34 interposed therebetween. The control valve 34 is a solenoid valve or the like, and extends or retracts the lift cylinder 8e.

A front end portion of the lower link 8b is supported on a lower rear portion of the transmission 5 so as to be swingable up or down. A front end portion of the top link 8c is supported above the lower link 8b on a rear portion of the transmission 5 so as to be swingable up or down. The lift rod 8d couples the lift arm 8a and the lower link 8b. A rear portion of the lower link 8b and a rear portion of the top link 8c have a hook shape.

When the lift cylinder 8e is driven (extends or retracts), the lift arm 8a is raised or lowered, and the lower link 8b coupled to the lift arm 8a by the lift rod 8d is raised or lowered. As a result, the working device 2 is swung up or down (raised or lowered) about the front portion of the lower link 8b.

Note that although the position changer 8 using a three-point linkage has been described as an example of the coupler 8 in the above description, it is only necessary that the coupler 8 can couple the working device 2 to the traveling vehicle body 3. For example, the coupler 8 may be a swinging drawbar or the like that couples the working device 2 and the traveling vehicle body 3 and does not change relative positions of the working device 2 and the traveling vehicle body 3.

The working device 2 is a device that performs work on a worksite H (e.g., an agricultural field H1) or a work target in the worksite H (e.g., crops planted in the agricultural field H1). The working device 2 is a cultivator that performs cultivation work, a ridge maker that makes a ridge, a groove cutter that performs groove cutting, a harvester that harvests crops, a mower that mows hay or the like, a tedder that spreads hay or the like, a rake that rakes up hay or the like, a baler that molds hay or the like, a fertilizer spreader that spreads a fertilizer, an agricultural chemical spreader that spreads an agricultural chemical, a separator that separates crops, or the like.

Note that although a case where the working machine 1 is a tractor and the working device 2 is coupled to the coupler 8 has been described, the working device 2 is not limited to an implement coupled to the traveling vehicle body 3 by the coupler 8. For example, the working device 2 may be a front loader attached to a front portion of the traveling vehicle body 3.

The working device 2 may be any device that is provided on the working machine 1 and performs work on the worksite H, and need not be a device that is attachable to and detachable from the traveling vehicle body 3 like an implement. For example, in the case where the working machine 1 is a combine, the working device 2 includes a mower that performs crop mowing or the like. In the case where the working machine 1 is a rice planter, the working device 2 includes a seedling planter that plants seedlings. In the case where the working machine 1 is a backhoe or a compact track loader, the working device 2 can be, for example, an attachment attachable to the position changer 8 (e.g., an arm or a boom).

As illustrated in FIG. 1, the working machine 1 includes a steering 11. The steering 11 includes a steering wheel 11a, a rotary shaft 11b (steering shaft) that rotates as the steering wheel 11a is rotated, and an assist mechanism 11c (power steering mechanism) that assists steering of the steering wheel 11a.

The assist mechanism 11c includes a control valve 35 and a steering cylinder 32. The control valve 35 is, for example, a three-position switching valve that is switchable by movement of a spool or the like. The control valve 35 is also switchable by steering of the steering shaft 11b. The steering cylinder 32 is connected to an arm 36 (knuckle arm) that changes a direction of the front wheel 7F. Accordingly, a switching position and an opening of the control valve 35 are switched in accordance with an operation of rotating the steering wheel 11a, and the steering cylinder 32 extends and retracts leftward or rightward in accordance with the switching position and opening of the control valve 35. The steering direction of the front wheel 7F is thus changeable.

Note that the steering 11 described above is an example and is not limited to the above configuration. For example, in the case where the traveling device 7 can change the steering angle by using different propelling forces at one of opposite sides in the width direction and at the other of the opposite sides in the width direction, the traveling device 7 may also function as the steering 11.

As illustrated in FIG. 1, the working machine 1 includes a controller 20. The controller 20 includes one or more processors. The controller 20 is a controller of the working machine 1 and performs various kinds of control concerning the working machine 1. The controller 20 is communicably connected to equipment and devices mounted on the working machine 1 over an in-vehicle network such as CAN, ISOBUS, LIN, or FlexRay. For example, the controller 20 controls (operates) the working device 2, the prime mover 4, the transmission 5, the position changer 8, the steering 11, and the like based on a signal (operation signal) input from an operation device.

The controller 20 includes one or more memories, various analog circuits, various digital circuits, and/or the like. The one or more memories store therein a software program to be executed by the one or more processors and various data. The controller 20 can read out a software program from the one or more memories and perform various processes based on the software program by the one or more processors. Note that the controller 20 may be capable of executing various processes based on a predetermined logic circuit by the one or more processors.

The processors are, for example, a central processing unit (CPU), a graphics processing unit (GPU), a digital signal processor (DSP), a field programmable gate array (FPGA), an application specific integrated circuit (ASIC), and the like.

Note that the controller 20 may perform various processes through collaboration of a plurality of processors that are located physically apart from each other, and the configuration of the controller 20 is not limited to the above configuration. In this case, the plurality of processors are mounted on one or more computers physically apart from the working machine 1, and these processors are communicably connected over a network such as an in-vehicle network, a LAN, a WAN, or the Internet.

The software program may be stored in a storing device (storage and/or memory) 21 (a nonvolatile memory such as an HDD, an SSD, a CD-ROM, or a DVD-ROM) communicably connected to the controller 20 or an external server device connected over the network and may be installed from the storing device 21 or the external server device into the memory.

As illustrated in FIG. 1, the working machine 1 includes one or more sensors 25. The sensor 25 senses a surrounding area of the working machine 1. Specifically, the sensor 25 performs the sensing by measuring a distance to a surrounding environment (surrounding object) of the working machine 1. The sensor 25 is a ranging sensor that measures a distance to at least a portion of surroundings of the working machine 1. The sensor 25 can detect point cloud data of the surrounding environment of the working machine 1 by measuring a distance to at least a portion of surroundings of the working machine 1.

The sensor 25 is communicably connected to the controller 20 by wire or wirelessly and outputs a sensing result to the controller 20. The sensor 25 includes an optical ranging sensor, a signal processing circuit, and the like. The optical ranging sensor of the sensor 25 is, for example, a light detection and ranging (LiDAR) sensor.

The LiDAR sensor (laser sensor) emits millions of measurement light (laser light) pulses per second from a light source such as a laser diode, the measurement light is reflected by a rotating mirror to be scanned horizontally or vertically and are thus projected onto a predetermined detection range (a sensing range, for example, 360°). Then, the LiDAR sensor causes a light receiving element to receive the measurement light reflected by a target. The signal processing circuit detects a distance to the target based on a period from the emission of the measurement light by the LiDAR sensor to the reception of the reflected light (Time of Flight (ToF) method).

Examples of the optical ranging sensor of the sensor 25 include imagers such as a charge coupled device (CCD) camera including a CCD image sensor or a complementary metal oxide semiconductor (CMOS) camera including a CMOS image sensor and a ToF camera in addition to the LiDAR sensor. Although a case where the sensor 25 includes an optical ranging sensor has been illustrated in the above example, an acoustic wave ranging sensor (e.g., an aerial ultrasonic sensor such as a sonar) may be used instead of the optical ranging sensor.

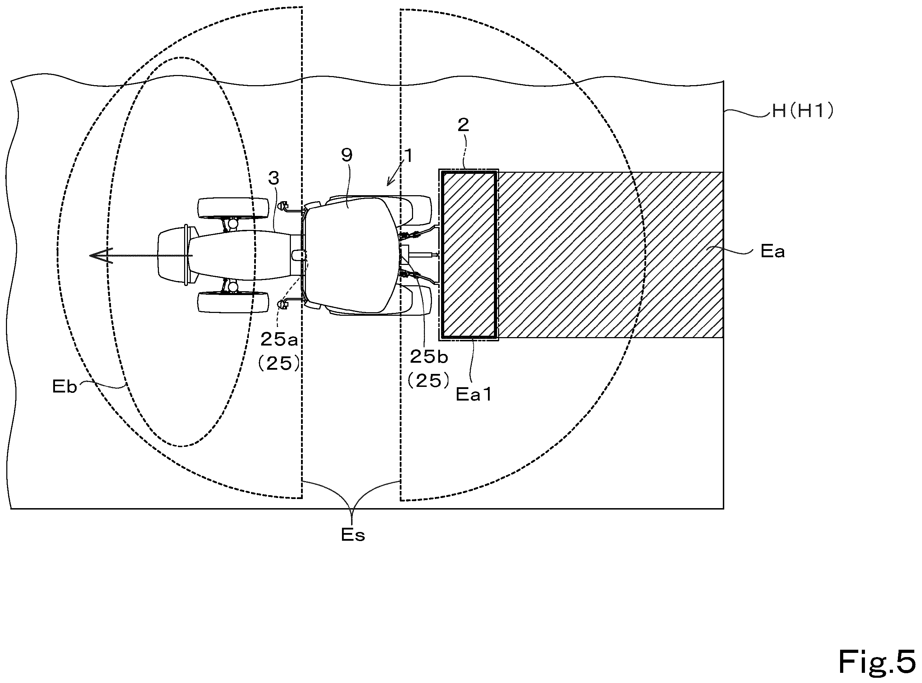

FIG. 5 illustrates an example of a sensing range Es of the sensor(s) 25 provided in or on the working machine 1. The one or more sensors 25 are provided in or on the working machine 1, and the range Es (sensing range) including at least an area Ea (worked area) having been worked by the working machine 1 (the working device 2) can be sensed by the one or more sensors 25. Furthermore, the sensor 25 can sense a range Eb (position estimation range) necessary for estimating the position of the working machine 1 on which the sensor 25 is provided. A range present ahead of the working machine 1 in a direction of travel can be illustrated as the position estimation range Eb.

FIG. 5 is merely a diagram for explaining the sensing range Es, and the ranges Es, Ea, and Eb are not limited to the example illustrated in FIG. 5. A distance that can be sensed by the sensor 25 varies depending on the ranging sensor used as the sensor 25.

The working machine 1 performs work while traveling, and therefore an area Ea1 to be worked by (that can be worked by) the working machine 1 (area worked by the working device 2 of the working machine 1 at a predetermined position, hereinafter may be referred to as a working range) moves as the working machine 1 travels. The working range Ea1 is a range where the working device 2 performs work at a predetermined position, in other words, a predetermined time point in the case where the working machine 1 performs work while traveling. That is, the working range Ea1 means a range where the working machine 1 at the predetermined position (time point) acts on a target (e.g., the agricultural field H1, crops planted in the agricultural field H1, or weeds in the agricultural field H1).

It can therefore be said that an area passed by the working range Ea1 defines the worked area Ea in the worksite H as the working machine 1 moves. The working range Ea1 corresponding to the current position of the working machine 1 is included in a portion of the worked area Ea. In other words, the working range Ea1 does not mean a whole range affected by a series of work performed in the worksite H (the agricultural field H1) by the working machine 1.

Note that although a substantially rectangular range in plan view is illustrated as the working range Ea1 in the example illustrated in FIG. 5 for convenience of description, this is not restrictive. The working range Ea1 varies depending on the kind or work content of the working device 2 and may be substantially circular or may have an irregular shape. Furthermore, the working range Ea1 varies depending on a work target (a place where work is performed) of the working device 2. Specifically, in the case where the working device 2 is a device, such as a cultivator, a ridge maker, or a mower, that performs work on the ground of the agricultural field H1, the working range Ea1 is the ground of the agricultural field H1, and therefore the worked area Ea is a portion of the ground of the agricultural field H1 that has been worked by the working device 2. In the case where the working device 2 is a device, such as a tree-fruit harvester, that performs work on a location other than the ground of the agricultural field H1, the working range Ea1 is a fruit tree or the like that is not the ground, and therefore the worked area Ea is an area in which such a to-be-worked object has been worked by the working device 2.

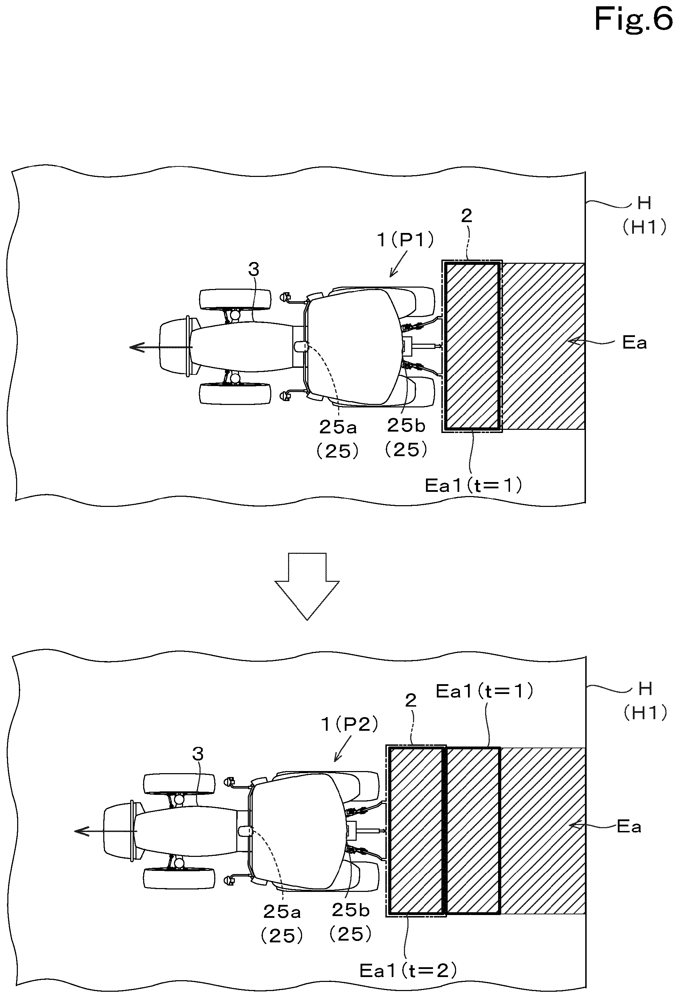

FIG. 6 illustrates the worked area Ea. In the case where the working machine 1 performs work while traveling in a predetermined direction of travel, the working machine 1 moves away from a place where work has been already performed as the working machine 1 travels in the direction of travel, irrespective of the position of the working device 2 relative to the working machine 1. Accordingly, in the case where the working machine 1 performs work at a predetermined first position P 1 and moves in the direction of travel away from the first position P1, the sensor 25 attached to the working machine 1 moves away from the working range Ea1 at the first position P1.

In this case, when viewed from the sensor 25, the working machine 1 and/or the working device 2 passes at least a portion of the working range Ea1 (t = 1) at the first position P1, and at least a portion of the working range Ea1 (t = 1) appear from the working machine 1 and/or the working device 2 at a predetermined second position P2 located ahead of the first position P1 in the direction of travel. In the example illustrated in FIG. 6, when the working machine 1 moves to the second position P2 located ahead (located forward) in the direction of travel, the working range Ea1 (t = 1) appears behind the working device 2 when viewed from the sensor 25. It is therefore preferable that a range including an area on the opposite side of the working device 2, etc., from an area ahead in the direction of travel can be sensed as the sensing range Es by the one or more sensors 25.

Note that although a case where the working device 2 is attached to a rear portion of the traveling vehicle body 3 and the sensor 25 senses an area behind the working machine 1 and the working device 2 is illustrated in the example illustrated in FIG. 5, the range of the sensing range Es including an area on the opposite side of the working device 2, etc., from an area ahead in the direction of travel is not limited to the area behind the working machine 1 and the working device 2. For example, in the case where the working device 2 is offset in the width direction from the traveling vehicle body 3, in other words, in the case where the working range Ea1 is offset in the width direction from the traveling vehicle body 3, the range of the sensing range Es including an area on the opposite side of the working device 2 from an area ahead in the direction of travel includes the working range Ea1 offset in the width direction with respect to the traveling vehicle body 3.

In the present embodiment, the working machine 1 travels forward or rearward. Accordingly, the sensor 25 can sense, as the surrounding area of the working machine 1, a range including at least a range ahead of the working machine 1 and a range behind the working machine 1. In the example illustrated in FIGS. 2 and 3, two sensors 25 are provided in or on the working machine 1, and one sensor 25a (first sensor) senses a range ahead of the working machine 1, and the other sensor 25b (second sensor) senses a range behind the working machine 1. For example, the first sensor 25a is provided on a front portion of a roof 9a of the cabin 9. The second sensor 25b is provided on a rear portion of the roof 9a.

The first sensor 25a masks an area where the devices and equipment provided on the working machine 1 such as the cabin 9 including the roof 9a are detected. Accordingly, the first sensor 25a senses a range (e.g., 180°) substantially forward of the working machine 1 and detects point cloud data in this sensing range Es.

The second sensor 25b masks the area where the devices and equipment provided on the working machine 1 such as the cabin 9 including the roof 9a are detected. In this case, the second sensor 25b may acquire the position of the working device 2 coupled to the position changer 8 and mask an area where the working device 2 is detected. Accordingly, the second sensor 25b senses a range (e.g., 180°) substantially rearward of the working machine 1 and detects point cloud data in this sensing range Es.

With the above configuration, in the present embodiment, substantially 360° around the working machine 1 can be sensed by the first sensor 25a and the second sensor 25b. Note that it is only necessary that one or more sensors 25 be provided in or on the working machine 1 and a surrounding area of the working machine 1 can be sensed by the one or more sensors 25, and the sensing range Es is not limited to substantially 360° around the working machine 1. Furthermore, the attachment position of the sensor 25 is not limited to the above position. For example, the sensor 25 may be attached to a different position such as a front portion or an upper portion of a hood that covers the prime mover 4. As illustrated in FIG. 5, the sensing range Es may include a blind area, but preferably covers substantially 360° around the working machine 1.

In the case where a ROPS is provided as the protection mechanism 9, a single sensor 25 may be provided on an upper portion of the ROPS. The front portion and the rear portion of the traveling vehicle body 3 may be each provided with an attachment structure extending outward in the width direction of the traveling vehicle body 3, and a pair of sensors 25 may be provided on each of the front portion and the rear portion of the traveling vehicle body 3 so as to be apart from the traveling vehicle body 3 outward in the width direction. The one or more sensors 25 may be provided on the working device 2 attachable to and detachable from the traveling vehicle body 3.

As illustrated in FIG. 1, the assist system S for the working machine 1 includes a position estimator 20a that estimates the position of the working machine 1 based on the sensing result from the sensor 25. The position estimator 20a is, for example, a software program installed in the controller 20. As another example, in the case where the working machine 1 is communicably connected directly or indirectly to an information processing device such as an external server, the position estimator 20a may be provided in the external server or the like of the working machine 1. In the following description, a case where the position estimator 20a is provided in the controller 20 (the working machine 1) is taken as an example, and detailed description of other examples is omitted.

The position estimator 20a estimates the position of the working machine 1 based on the sensing result from the sensor 25 and the environmental map information. The position estimator 20a estimates the position based on the sensing result from the sensor 25 (a ranging signal acquired from a ranging sensor), the environmental map information, and a Simultaneous Localization and Mapping (SLAM) algorithm. In particular, the position estimator 20a may be configured or programmed to estimate the position based on a portion, of the sensing result obtained from the sensor 25 during work performed by the working machine 1, that relates to an area having not been worked by the working machine 1, and not to estimate the position based on a portion, of the sensing result obtained from the sensor 25 during work performed by the working machine 1, that relates to the area Ea1 worked by the working machine 1. Accordingly, for example, the position estimator 20a estimates the position at least based on a portion, of the sensing result obtained from the sensor 25 during work performed by the working machine 1, that relates to an area other than the current working range Ea1, and does not estimate the position based on a portion of the sensing result that relates to the current working range Ea1.

Specifically, for example, the position estimator 20a is configured or programmed to estimate the position based on the portion, of the sensing result obtained during work performed by the working machine 1, that relates to an area ahead of the working device 2 in the direction of travel and not to estimate the position based on the portion, of the sensing result obtained during work performed by the working machine 1, that relates to the area on the opposite side of the working device 2 from the area ahead of the working device 2 in the direction of travel.

The environmental map information is map information indicative of an object in an environment around the worksite H including the worksite H where the working machine 1 performs work, and is generated by using point cloud data. This is described by taking, as an example, a case where the worksite H is the agricultural field H1 and the environmental map information indicates an environment around the agricultural field H1 including the agricultural field H1. In the environmental map information, the ground around the agricultural field H1, crops planted in the agricultural field H1, a ridge formed in the agricultural field H1, a border ridge surrounding the agricultural field H1, a fence surrounding the agricultural field H1, weeds on the ground around the agricultural field H1, a barn around the agricultural field H1, and the like are indicated as three-dimensional point clouds. The environmental map information is generated in advance based on the sensing result from the sensor 25 and is stored in the storing device 21. Note that the environmental map information stored in the storing device 21 may be one generated based on a sensing result from a sensor 25 of another working machine 1 or the like.

The position estimator 20a estimates the position of the working machine 1 by acquiring point cloud data (detected point cloud data) from the sensing result from the sensor 25 of the working machine 1 and performing position matching (matching) of the acquired detected point cloud data with the point cloud data of the environmental map information. As the estimation of the position of the working machine 1, the position estimator 20a estimates a predetermined position of the working machine 1. The position estimator 20a may estimate the position based on a self-position (a position of a GPS antenna) detected by a position detector attached to the working machine 1 by using a satellite positioning system (positioning satellite) such as D-GPS, GPS, GLONASS, BeiDou, Galileo, or Michibiki. In this case, the position of the working machine 1 estimated by the position estimator 20a is not limited to the self-position detected by the position detector and may be a different position (e.g., a central position of the working machine 1 in the front-rear direction or the width direction or a position of a center of gravity of the working machine 1).

For example, the position estimator 20a performs position matching of the detected point cloud data with the point cloud data of the environmental map information by sequentially translating and rotating one of the point clouds so that the point clouds optimally match by using an Iterative Closest Point (ICP) algorithm, a Normal Distributions Transform (NDT) algorithm, or the like. For example, the position estimator 20a estimates the position of the working machine 1 by performing position matching of the detected point cloud data with the point cloud data of the environmental map information, sequentially estimating a movement amount, and accumulating the movement amount.

The assist system S for the working machine 1 includes an assist device 100 that assists traveling and/or work of the working machine 1 based on the position (estimated position EP) of the working machine 1 estimated by the position estimator 20a. The controller 20 that controls the traveling device 7 and/or the working device 2 of the working machine 1 based on the estimated position EP can be exemplified as the assist device 100.

As illustrated in FIG. 1, the controller 20 includes an automatic operation controller 20b. The automatic operation controller 20b includes an electric/electronic circuit and a CPU provided in the controller 20, , program(s) stored in a memory, and/or the like.

The automatic operation controller 20b performs control of automatic driving of the working machine 1 (hereinafter referred to as automatic driving control). The automatic operation controller 20b can perform line-type automatic driving control and/or autonomous automatic driving control. The automatic driving is described by taking, as an example, the line-type automatic driving control. The automatic operation controller 20b controls the equipment and devices included in the working machine 1 so that the traveling vehicle body 3 travels along a scheduled traveling route L defined in advance based on the estimated position EP and the scheduled traveling route L. For example, the automatic operation controller 20b controls a steering angle and a traveling speed (vehicle speed) of the traveling vehicle body 3 as the automatic driving control.

The scheduled traveling route L may be stored in advance in the storing device 21 or may be created (defined) based on the estimated position EP estimated by the position estimator 20a during actual traveling of the working machine 1. Alternatively, the scheduled traveling route L may be created based on information input by an input interface.

The input interface is, for example, a display 15 that is provided on the working machine 1 and on which an input operation can be performed. The display 15 includes, for example, a touch pad, a hardware switch, or the like in addition to a display screen that displays a screen. The input interface may be a terminal that is communicably connected to the controller 20 and can be operated such as a smartphone, as long as information can be input and the input information can be acquired by the controller 20. The input interface may create the scheduled traveling route L or another arithmetic processing device may create the scheduled traveling route L based on information received by the input interface. Furthermore, the input interface may be a communicator that can communicate with an external server or the like, and the communicator may receive the scheduled traveling route L managed in the external server or the like.

In the automatic driving control, the automatic operation controller 20b controls the steering angle so that a position deviation between the estimated position EP and the scheduled traveling route L becomes less than a threshold. That is, in the case where the position deviation between the estimated position EP and the scheduled traveling route L is less than the threshold, the automatic operation controller 20b maintains the steering angle by controlling the control valve 35 of the steering 11. On the other hand, in the case where the position deviation between the estimated position EP and the scheduled traveling route L is equal to or greater than the threshold, the automatic operation controller 20b changes the steering angle so that the position deviation decreases by controlling the control valve 35 of the steering 11.

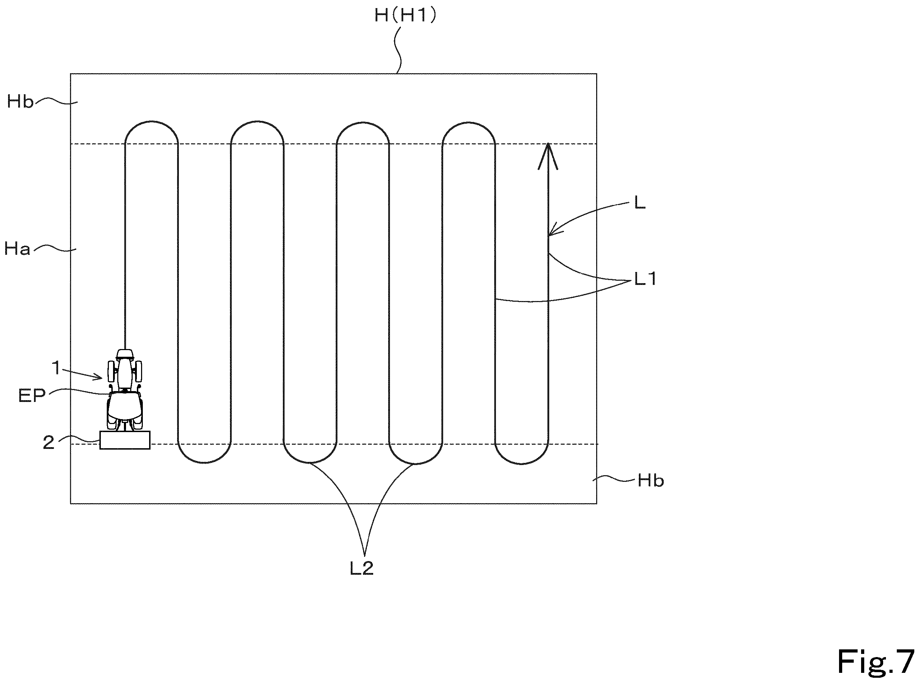

Automatic driving control performed in the case where the working machine 1 performs work in the agricultural field H1 is described. The automatic operation controller 20b performs, for example, automatic driving control so that the working machine 1 travels back and forth between a first edge and a second edge of the worksite H (the agricultural field H1). FIG. 7 illustrates the scheduled traveling route L. As illustrated in FIG. 7, the scheduled traveling route L in the agricultural field H1 includes a straight traveling portion L1 that extends from one of the first edge and the second edge of the agricultural field H1 to the other and a turning portion L2 that connects one straight traveling portion L1 and another straight traveling portion L1.

The automatic operation controller 20b may control work performed by the working device 2 by controlling the units such as the working device 2 and the position changer 8 in accordance with the position of the working machine 1 on the scheduled traveling route L and the like. The automatic operation controller 20b can control whether to perform or stop work of the working device 2. The automatic operation controller 20b can switch between a working state in which the working device 2 performs work and a non-working state in which the working device 2 does not perform work by controlling drive of the position changer 8 (raising/lowering device) and the PTO shaft 6.

This is described by taking, as an example, a case where the working device 2 is a working device 2, such as a cultivator or a ridge maker, that is towed by the working machine 1 and performs work while being in contact with the ground or cutting into the ground. The automatic operation controller 20b can switch to the working state by lowering the working device 2 to the ground by the position changer 8 and can switch to the non-working state by raising the working device 2 from the ground by the position changer 8.

In the case where the working device 2 is a working device 2, such as a rotary cultivator or a baler, that is driven by power transmitted from the PTO shaft 6 or is driven by a built-in actuator (e.g., an electric actuator), the automatic operation controller 20b can switch between the working state and the non-working state by controlling such a power source (e.g., the PTO shaft 6 or the actuator).

For example, the automatic operation controller 20b switches to the working state in the case where the estimated position EP is positioned on the straight traveling portion L1, and switches to the non-working state in the case where the estimated position EP is positioned on the turning portion L2.

The switching between the working state and the non-working state performed by the automatic operation controller 20b may be performed in accordance with an area defined within the agricultural field map irrespective of the estimated position EP on the scheduled traveling route L. For example, an area where work is performed (working area Ha) is defined inside a headland of the agricultural field H1. An area where work is not performed (non-working area Hb) is defined in the headland, a gateway, or a place where work has been performed of the agricultural field H1. Note that the working area Ha and the non-working area Hb described above are merely illustrative. For example, the working area Ha may include a headland.

Note that although the automatic driving has been described by taking, as an example, the line-type automatic driving control in the above embodiment, the automatic operation controller 20b controls the equipment and devices included in the working machine 1 to perform work in the agricultural field H1 based on the estimated position and the sensing result irrespective of the scheduled traveling route L in the autonomous automatic driving control.

Although the controller 20 including the automatic operation controller 20b has been described as an example of the assist device 100 in the above embodiment, it is only necessary that the assist device 100 can assist work and/or traveling of the working machine 1 based on the estimated position EP of the position estimator 20a. For example, the controller 20 may include an automatic steering controller that controls a steering angle of the traveling vehicle body 3 so that the traveling vehicle body 3 travels along the scheduled traveling route L in addition to or instead of the automatic operation controller 20b. Furthermore, the working machine 1 may use, as the assist device 100, the display 15 that displays a current position of the working machine 1 on an agricultural field map indicative of the agricultural field H1 based on the estimated position EP estimated by the position estimator 20a and the agricultural field map. The display 15 may be a display provided, for example, around the operator's seat 10 of the working machine 1 or may be a mobile terminal which a worker carries, an administrator terminal that monitors work of the working machine 1, or the like. Examples of the mobile terminal and the administrator terminal include terminals such as a smartphone (multi-function mobile phone), a tablet PC, and a PDA and a stationary computer such as a personal computer.

As illustrated in FIG. 1, the assist system S for the working machine 1 includes an updater 20c. The updater 20c performs an update process to update environmental map information based on a portion, of the sensing result obtained during work performed by the working machine 1, that relates to the area Ea (worked area) having been worked by the working machine 1. The updater 20c may perform the update process during the automatic driving performed by the automatic operation controller 20b or may perform the update process during manual operation performed by the operation device. The updater 20c may perform the update process at a time of end of work of the working machine 1 or may perform the update process after the end of the work of the working machine 1. The updater 20c is, for example, a software program installed in the controller 20. As another example, in the case where the working machine 1 is communicably connected directly or indirectly to an information processing device such as an external server, the updater 20c may be provided in the external server or the like of the working machine 1. In the following description, a case where the updater 20c is provided in the controller 20 (the working machine 1) is described as an example, and detailed description of other examples is omitted.

The updater 20c perform the update process based on a portion, of the sensing result obtained during work performed by the working machine 1, that relates to an area on the opposite side of the working device 2 of the working machine 1 from an area ahead of the working device 2 in the direction of travel. The updater 20c can thus perform the update process based on the sensing result of the worked area Ea appearing from the working machine 1 and/or the working device 2.

The updater 20c performs the update process to update the environmental map information, for example, by sequentially rewriting, for each predetermined position estimated by the position estimator 20a, the point cloud data of the environmental map information by using point cloud data (detected point cloud data) in the worked area Ea. In this case, the updater 20c updates the environmental map information by rewriting the point cloud data of the environmental map information stored in the storing device 21. The position estimator 20a can thus estimate the position of the working machine 1 based on the sensing result from the sensor 25 and the environmental map information updated by the updater 20c. In the present embodiment, the position estimator 20a estimates the position based on the updated environmental map information by sequentially referring to the environmental map information updated by the updater 20c. The update process performed by the updater 20c is described in detail below.

In the update process, the updater 20c performs a first process to determine the portion of the environmental map information that relates to the area Ea1 (working range) to be worked by the working machine 1, and a second process to re-register data for the portion relating to the area Ea1 determined in the first process based on the sensing result. The first process performed by the updater 20c is described in detail below.

The updater 20c determines the working range Ea1 at each location (each time point) of the traveling working machine 1. Furthermore, the updater 20c substantially determines the worked area Ea by determining the working range Ea1 at each location (each time point). Note that although the updater 20c determines the working range Ea1 for each estimated position EP, the updater 20c may determine the working range Ea1 at predetermined time intervals.

This is described by taking, as an example, a case where the working device 2, such as a cultivator or a ridge maker, that performs work on the ground of the agricultural field H1, is attached to the traveling vehicle body 3. The updater 20c acquires, as the working range Ea1 at each location (each time point) of the working machine 1, a two-dimensional range defined in the front-rear direction and the width direction with respect to the direction of travel of the working machine 1. In this case, the updater 20c need only acquire a two-dimensional range including the working range Ea1, and the range need not be a range where the working device 2 actually acts on a target and may be a range including the working range Ea1 and whose shape is a simplified external shape of the working range Ea1.

The updater 20c acquires position information (work position information) in a coordinate system (estimated position coordinates, local coordinates) based on the estimated position EP and calculates the working range Ea1 based on the estimated position EP and the work position information. Specifically, the updater 20c converts the work position information, which is the local coordinates, into world coordinates based on the estimated position EP and acquires position information of the working range Ea1 in the world coordinate system.

The updater 20c acquires the work position information by acquiring information on the working device 2 from a storage area such as the storing device 21 or an external server. For example, the work position information is defined in association with each working device 2 and is stored in the storage area. Specifically, the updater 20c acquires the working device 2 based on information input to the input interface. In the case where the input interface is a terminal (e.g., the display 15 or a smartphone) to which information can be manually input, a worker manually inputs, to the input interface, information concerning the working device 2 attached to the traveling vehicle body 3, and the updater 20c determines the working device 2 attached to the traveling vehicle body 3 based on the input information. After determining the working device 2 attached to the traveling vehicle body 3, the updater 20c acquires the work position information corresponding to the working device 2 by referring to the storage area such as the storing device 21 or the external server.

Note that a method by which the controller 20 (the updater 20c) determines the working device 2 is not limited to manual input to the input interface. For example, in the case where work content (work plan) of work to be performed in the worksite H is defined in advance in the administrator terminal by an administrator and the work plan includes the working device 2 to be attached to the traveling vehicle body 3, the updater 20c may determine the working device 2 attached to the traveling vehicle body 3 based on information on the work plan input to the input interface (communicator) from the administrator terminal, a server, or the like.

In the case where a transmitter (e.g., a beacon) that transmits individual identification information for determining the working device 2 is attached to the working device 2, the controller 20 (the updater 20c) may determine the working device 2 attached to the traveling vehicle body 3 based on the identification information received from the beacon by the input interface (a receiver, a beacon scanner).

A method by which the updater 20c acquires the work position information is not limited to the above example, and the input interface such as the display 15 may receive input of dimension information (a length in the front-rear direction, a length in the width direction, and a positional relationship with the estimated position EP) of the work position information, and the updater 20c may acquire the work position information based on the length in the front-rear direction and the length in the width direction received by the input interface.

In the case where the coupler 8 is a position changer, the relative positions of the traveling vehicle body 3 and the working device 2 are changed by the position changer 8. Accordingly, in the case where the work position information is position information in the estimated position coordinates, the work position information sometimes changes when the relative positions are changed. Accordingly, in the case where the coupler 8 is a position changer, the updater 20c preferably acquires a posture of the position changer 8 and calculates work position information according to the posture. In such a case, a posture detector such as a rotation sensor (e.g., a potentiometer, a rotary encoder), an acceleration sensor, or a stroke sensor is attached to the position changer 8 or the like, and the controller 20 acquires the posture of the position changer 8 based on a detection result from the posture detector. Accordingly, the updater 20c can acquire work position information according to the posture of the position changer 8 by correcting the work position information based on the acquired posture of the position changer 8.

Note that although a case where the updater 20c acquires work position information according to the posture of the position changer 8 by correcting the work position information has been described as an example, a predetermined arithmetic expression may be stored in a storage area, and the updater 20c may acquire work position information according to the posture of the position changer 8 by using the arithmetic expression and the posture of the position changer 8.

Although a case where the updater 20c acquires the posture of the position changer 8 in acquisition of the work position information in the first process has been described in the above example, the updater 20c may perform the first process depending on the posture of the position changer 8, that is, whether the working device 2 of the working machine 1 is in a working state in which the working device 2 performs work or in a non-working state in which the working device 2 does not perform work. Specifically, the updater 20c performs the first process in the case where the working device 2 is in the working state and does not perform the first process in the case where the working device 2 is in the non-working state. That is, the updater 20c determines the working range Ea1 at a location (time point) where the working device 2 is in the working state and does not determine the working range Ea1 at a location (time point) where the working device 2 is in the non-working state.

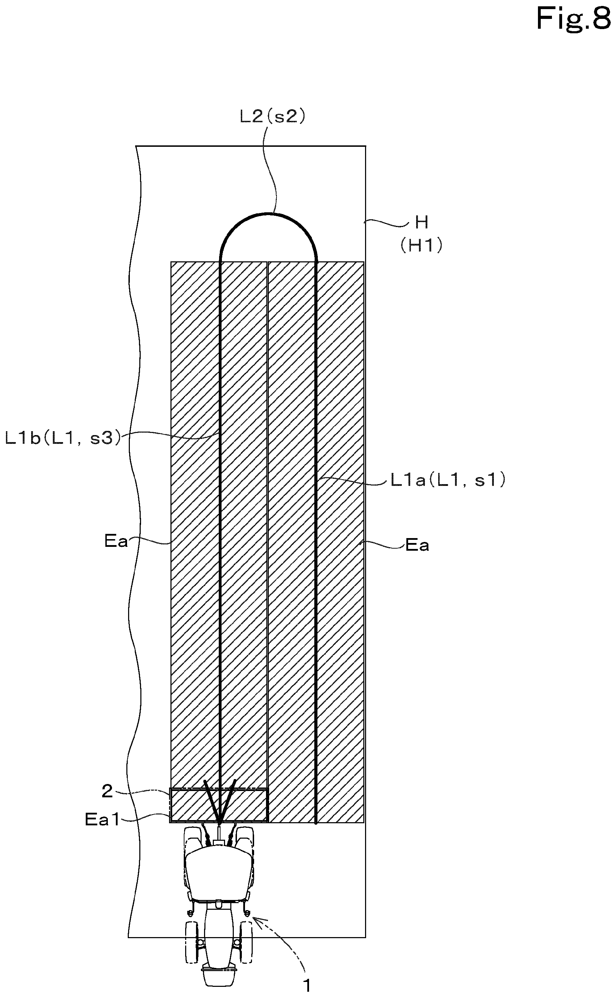

FIG. 8 illustrates determination of the working range Ea1 (the worked area Ea) at each location (each time point) in the first process. In the example illustrated in FIG. 8, the working machine 1 moves from a straight traveling portion L1a to a turning portion L2 and moves from the turning portion L2 to a next straight traveling portion L1b, that is, the working device 2 shifts from the working state to the non-working state and then returns to the working state. As illustrated in the example of FIG. 8, in a section (first section s1) where the working device 2 is in the working state, the updater 20c determines the working range Ea1 at each location (each time point) by performing the first process, and in a section (second section s2) where the working device 2 is in the non-working state, the updater 20c does not perform the first process and does not determine the working range Ea1 at each location (each time point). Then, as illustrated in the example of FIG. 8, in a section (third section s3) where the working device 2 is in the working state that follows the second section s2, the updater 20c determines the working range Ea1 at each location (each time point) by performing the first process. Accordingly, in the example illustrated in FIG. 8, the worked area Ea is interrupted in the second section s2 among the first to third sections s1 to s3.

The updater 20c determines whether the working device 2 is in the working state or is in the non-working state, for example, by acquiring an instruction signal given from the automatic operation controller 20b to equipment or a device or an instruction signal given from the operation device to equipment or a device. Alternatively, the updater 20c may determine whether the working device 2 is in the working state or is in the non-working state based on a detection result from the posture detector, a rotation detection sensor that detects a rotational speed of the PTO shaft 6, or the like. Alternatively, the updater 20c may determine whether the working device 2 is in the working state or is in the non-working state based on the estimated position EP and the scheduled traveling route L and/or the agricultural field map.

In the first process, the updater 20c deletes the working range Ea1 at each location (each time point) in the environmental map information. In this case, the updater 20c may sequentially delete each point cloud data in the working range Ea1 every time the working range Ea1 is determined. Specifically, the updater 20c deletes each point cloud data located vertically with respect to the working range Ea1. Accordingly, in the first process, the updater 20c deletes the worked area Ea of the environmental map information. That is, in the first process, the updater 20c deletes each point cloud data in the determined worked area Ea among point cloud data included in the environmental map information.

This is described by taking the case of FIG. 8 as an example. In the section (the first section s1) where the working device 2 is in the working state, the updater 20c deletes point cloud data in the working range Ea1 (the worked area Ea) at each location (each time point) determined by performing the first process. Next, in the section (the second section s2) where the working device 2 is in the non-working state that follows the first section s1, the updater 20c does not delete point cloud data. Then, in the section (the third section s3) where the working device 2 is in the working state that follows the second section s2, the updater 20c deletes the point cloud data in the working range Ea1 at each location (each time point) determined by performing the first process. Accordingly, in the example illustrated in FIG. 8, the point cloud data in the first section s1 and the third section s3 is deleted, and the point cloud data in the second section s2 is not deleted among the first to third sections s1 to s3.

Next, the second process is described. In the second process, the updater 20c re-registers, based on the sensing result, data for a portion Ec (deletion area) of the environmental map information in which data deletion was performed in the first process. In the second process, the updater 20c registers, in the deletion area Ec, point cloud data (detected point cloud data) of the portion of the sensing result at each estimated position EP that relates to an area on the opposite side of the working device 2 of the working machine 1 from an area ahead of the working device 2 in the direction of travel. As a result, the updater 20c can sequentially register new point cloud data instead of point cloud data of the environmental map information deleted in the first process as the working machine 1 travels.

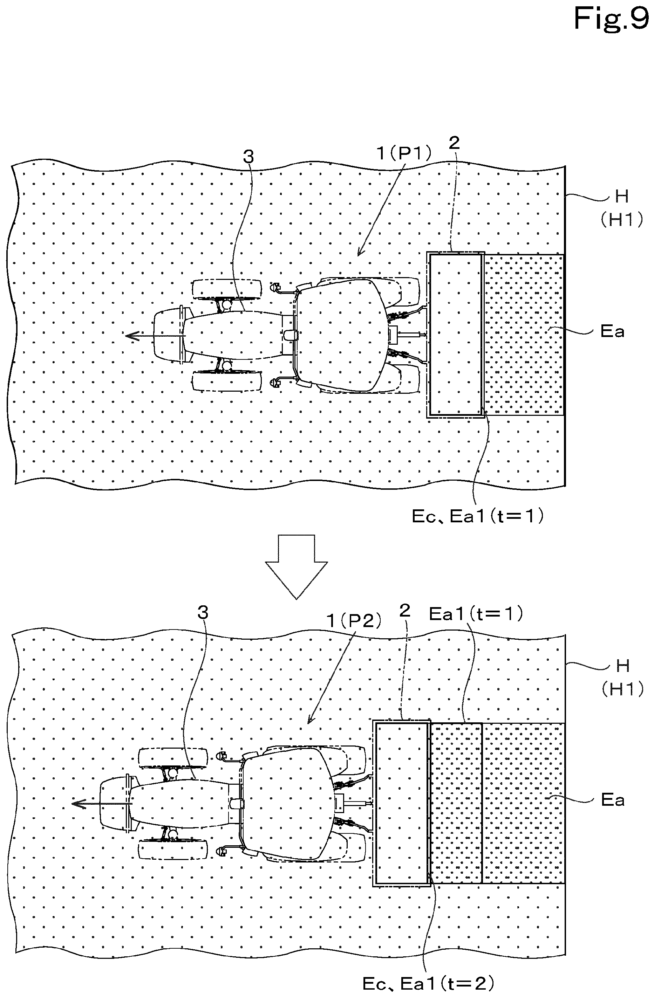

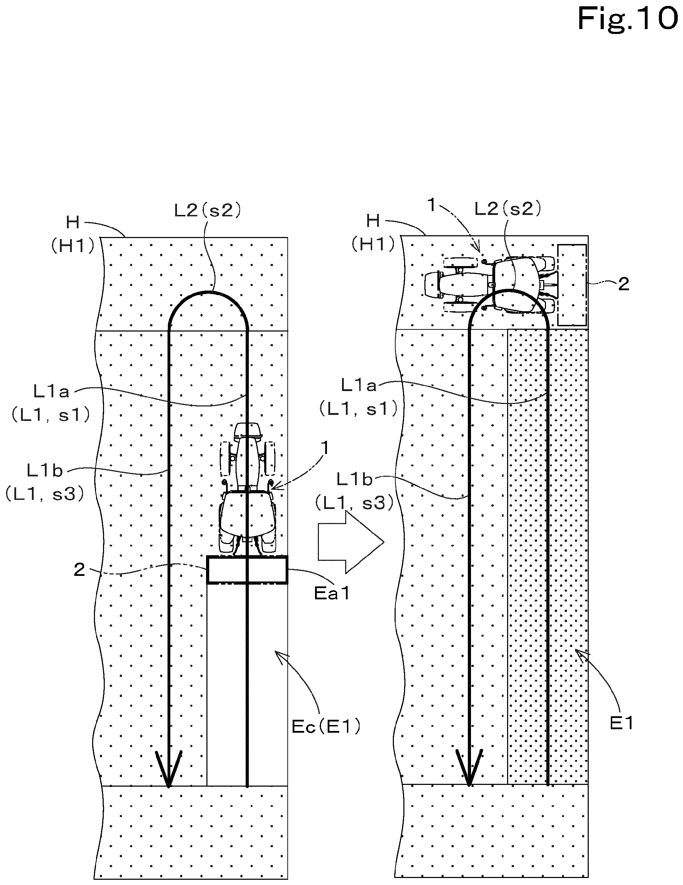

FIG. 9 illustrates update of the working range Ea1 (the worked area Ea) at each location (each time point) in the second process. FIG. 9 illustrates a case where the working machine 1 moves from a predetermined first position P1 to a second position P2 where the working range Ea1 at the first position appears from the working device 2. In FIG. 9 (and FIG. 10, which will be described later), an area where point cloud data is registered is given dots, and an area (the deletion area Ec) where point cloud data has been deleted and no point cloud data is registered is given no dot. Furthermore, an area where point cloud data has been re-registered by the updater 20c is indicated by denser dots than an area that has not been updated.

As illustrated in FIG. 9, in the case where the working machine 1 is at the first position P1, the updater 20c determines the working range Ea1 at the first position P1 and deletes the working range Ea1 (the deletion area Ec) in the first process. When the working machine 1 moves from the first position P1 to the second position P2, the working range Ea1 at the first position, that is, the deletion area Ec appears from the working device 2, and when the sensor 25 senses the deletion area Ec, the updater 20c re-registers point cloud data in the deletion area Ec of the environmental map information based on the sensing result of the deletion area Ec obtained from the sensor 25. In this case, the updater 20c may register detected point cloud data only in the deletion area Ec based on the sensing result or may update the map information by superimposing detected point cloud data on an area other than the deletion area Ec.

Note that although a case where the updater 20c updates the environmental map information by sequentially performing the first process and the second process as the working machine 1 travels has been described as an example in the above example, the updater 20c may be configured or programmed to, in a case that the working machine 1 travels back and forth between a first edge and a second edge of the worksite H, update the environmental map information upon each travel of the working machine 1 from one of the first edge and the second edge to the other. In this case, the updater 20c performs the first process including deleting data from the portion of the environmental map information that relates to the area Ea1 to be worked by the working machine 1 as the working machine 1 travels, and performs the second process upon each travel of the working machine 1 from one of the first edge and the second edge to the other.

In this variation, the updater 20c sequentially performs the first process as the working machine 1 travels to delete point cloud data in the working range Ea1 (the worked area Ea) at each location (each time point) from the environmental map information, and holds, in the memory, at least a portion of the sensing result from the sensor 25 that relates to the worked area Ea until the working machine 1 reaches a terminal end of the straight traveling portion L1 where the working machine 1 is currently traveling. In this case, the updater 20c holds, in the memory, a sensing result including not only detected point cloud data, but also other information such as the position of the working machine 1 at the time of acquisition of the detected point cloud data, the posture of the position changer 8 at the time of acquisition of the detected point cloud data, and the time of acquisition of the detected point cloud data.

Then, as the second process, the updater 20c registers the detected point cloud data in the deletion area Ec based on the held sensing result while the working machine 1 is traveling from the terminal end of the current straight traveling portion L1 to a start end of a next straight traveling portion L1. Specifically, the updater 20c updates the environmental map information based on the detected point cloud data and other information included in the sensing result.

FIG. 10 illustrates update of the working range Ea1 (the worked area Ea) at each location (each time point) in the second process according to the variation. In the example illustrated in FIG. 10, the working machine 1 moves from the straight traveling portion L1a to the turning portion L2 and moves from the turning portion L2 to the next straight traveling portion L1b, that is, the working device 2 shifts from the working state to the non-working state and then returns to the working state, as in FIG. 8. In the case where the working machine 1 is traveling in the first section s1, the updater 20c deletes data of the worked area Ea of the environmental map information as the working machine 1 travels (the first process), and re-registers point cloud data in the deletion area Ec in the first section s1 while the working machine 1 is traveling in the second section s2 (in other words, from a terminal end of the first section s1 to a start end of the third section s3) (the second process).

Although a case where the updater 20c acquires information concerning the working device 2 attached to the traveling vehicle body 3 to acquire the working range Ea1 in the first process has been described in the above example, the update process may be performed in accordance with the working device 2 attached to the working machine 1 and/or work of the working device 2. In this case, the updater 20c performs the update process in the case where the working device 2 performs work that possibly changes a shape of the worksite H, and does not perform the update process in the case where the working device 2 performs work that does not change the shape of the worksite H.

Examples of the work performed by the working device 2 that possibly changes the shape of the worksite H include cultivation work, ridge making, groove cutting, harvesting of crops, mowing of hay or the like, spreading of hay or the like, raking of hay or the like, and molding of hay or the like. Examples of the working device 2 that perform these kinds of work include a cultivator, a ridge maker, a groove cutter, a harvester, a mower, a tedder, a rake, and a baler.

On the other hand, the work performed by the working device 2 that does not change the shape of the worksite H include fertilizer spreading and agricultural chemical spreading. Examples of the working device 2 that perform these kinds of work include a fertilizer spreader and an agricultural chemical spreader.

The updater 20c determines the working device 2 or work content of work to be performed by the working device 2, for example, by the above method for determining the working device 2, and performs the update process or does not perform the update process based on the working device 2 or content of work to be performed by the working device 2.

Although the updater 20c determines the working range Ea1 at each location (each time point) of the traveling working machine 1 (the first process) and re-registers data for the substantially determined worked area Ea of the environmental map information (the second process) in the above example, the updater 20c need only update the environmental map information based on the sensing result of the worked area Ea. That is, the updater 20c may delete point cloud data in a place which a standard such as a front edge or a rear edge of the working range Ea1 at each location (each time point) (at least a standard in the width direction horizontally orthogonal to the direction of travel) has passed instead of the working range Ea1 at each location (each time point) (the first process), and re-register point cloud data in the deletion area Ec (the second process).

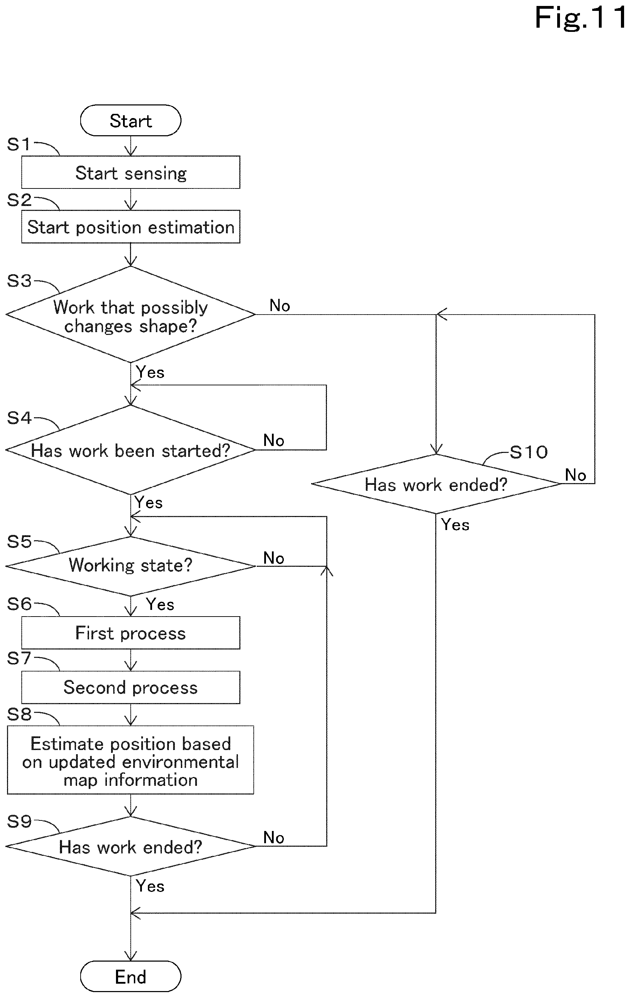

A flow of a series of processes including the position estimation performed by the position estimator 20a and the update process performed by the updater 20c is described below with reference to FIG. 11. FIG. 11 is a flowchart illustrating an example of the position estimation performed by the position estimator 20a and the update process performed by the updater 20c. Each step in FIG. 11 is executed by the controller 20 in accordance with a software program stored in the memory or the storing device 21.

First, the controller 20 starts sensing of a surrounding area of the working machine 1 by the sensor 25 (S1). The step of sensing the surrounding area of the working machine 1 by the sensor 25 is sometimes referred to as a "first step". When the sensor 25 starts sensing, the controller 20 (the position estimator 20a) starts position estimation based on a sensing result from the sensor 25 and the environmental map information (S2).

The controller 20 (the updater 20c) determines whether or not the working device 2 attached to the traveling vehicle body 3 performs work that possibly changes the shape of the worksite H (S3). The updater 20c determines whether or not the working device 2 performs work that possibly changes the shape of the worksite H based on information concerning the working device 2 received by the input interface.

In the case where the controller 20 (the updater 20c) determines that the working device 2 attached to the traveling vehicle body 3 performs work that possibly changes the shape of the worksite H (S3: Yes), the controller 20 (the updater 20c) determines whether or not the work has been started (S4). For example, the controller 20 determines whether or not the working machine 1 is at a predetermined start position in the worksite H based on the estimated position EP estimated by the position estimator 20a, and in the case where the controller 20 determines that the working machine 1 is at the predetermined start position and that the working device 2 is in the working state, the controller 20 determines that the work has been started in the worksite H (the agricultural field H1).

In the case where the controller 20 (the updater 20c) determines that the work has been started in the worksite H (the agricultural field H1) (S4: Yes), the controller 20 (the updater 20c) determines whether or not the working device 2 is in the working state (S5). For example, in the case where the updater 20c determines that the working device 2 is in the working state (S5: Yes) based on instruction signals from the automatic operation controller 20b to the equipment and devices, instruction signals from the operation device to the equipment and devices, or the like, the updater 20c performs the first process (S6). Specifically, the updater 20c determines the working range Ea1 (the worked area Ea) at each location (each time point) in the environmental map information and deletes point cloud data in the working range Ea1 from the environmental map information. Note that in the case where the controller 20 (the updater 20c) determines that the work has not been started (S4: No), the controller 20 (the updater 20c) returns to step S4, and in the case where the controller 20 (the updater 20c) determines that the working device 2 is not in the working state (S5: No), the controller 20 (the updater 20c) returns to step S5.

After performing the first process (S6), the controller 20 (the updater 20c) performs the second process (S7). The updater 20c re-registers data for the portion (the deletion area Ec) in which data deletion was performed in the first process in step S6 based on the sensing result in the first step. That is, by the processes in S6 and S7, the controller 20 (the updater 20c) updates the environmental map information based on a portion, of the sensing result obtained from the sensor 25 in the first step, that relates to an area having been worked by the working machine 1 (second step). The updater 20c updates the environmental map information based on not only detected point cloud data of the sensing result, but also other information included in the sensing result (e.g., the position of the working machine 1 at a time of acquisition of the detected point cloud data, the posture of the position changer 8 at the time of acquisition of the detected point cloud data, and the time of acquisition of the detected point cloud data).

Then, the controller 20 (the position estimator 20a) estimates the position of the working machine 1 based on the sensing result from the sensor 25 in the first step and the environmental map information updated by the updater 20c in the second step (S6 and S7) (S8). Note that the working machine 1 may sense detected point cloud data for updating the environmental map information while performing work, and a working machine or the like different from the working machine 1 may use the environmental map information updated based on the detected point cloud data.

The controller 20 determines whether or not the work has been finished in the worksite H (the agricultural field H1) (S9). For example, the controller 20 determines whether or not the working machine 1 is at a predetermined end position in the worksite H based on the estimated position EP estimated by the position estimator 20a, and in the case where the controller 20 determines that the working machine 1 is at the end position and that the working device 2 is in the non-working state, the controller 20 determines that the work in the worksite H (the agricultural field H1) has been finished. Note that a method by which the controller 20 determines whether or not the work in the worksite H has been finished is not limited to the above example, and for example, the controller 20 may determine whether or not the work in the worksite H has been finished by determining whether or not work scheduled in the worksite H has been completed based on a work record of the work performed by the working device 2.

The controller 20 returns to step S5 in the case where the work has not been finished (S9: No), and the controller 20 ends the series of processes in the case where the work has been finished (S9: Yes).

In the case where the controller 20 (the updater 20c) determines that the working device 2 attached to the traveling vehicle body 3 performs work that does not change the shape of the worksite H (S3: No), the controller 20 (the position estimator 20a) estimates the position based on the sensing result from the sensor 25 and the environmental map information without updating the environmental map information. The controller 20 determines whether or not the work has been finished in the worksite H (the agricultural field H1) (S10), and in the case where the work has not been finished (S10: No), the controller 20 returns to step S10, and in the case where the position estimator 20a continuously estimates the position without updating the environmental map information by the updater 20c and the work has been finished (S10: Yes), the controller 20 ends the series of processes.

The series of processes including the position estimation and the update process illustrated in FIG. 11 are merely an example and are not restrictive. For example, although the controller 20 performs step S3 after step S1 and step S2 in the example illustrated in FIG. 11, the controller 20 may perform step S1 and step S2 after step S3. Furthermore, although the controller 20 performs step S9 after steps S6 to S8 in the example illustrated in FIG. 11, the controller 20 may perform steps S6 to S8 after step S9.

Example embodiments of the present invention provide assist systems S for working machines 1 and methods of assisting working machines 1 described in the following items.

(Item 1) An assist system S for a working machine 1, including one or more sensors 25 provided in or on a working machine 1 to sense a surrounding area of the working machine 1 to obtain a sensing result, the working machine 1 being configured to perform work while traveling, and an updater 20c configured or programmed to perform an update process to update environmental map information based on a portion, of the sensing result obtained during work performed by the working machine 1, that relates to an area Ea having been worked by the working machine 1.

With the assist system S for a working machine 1 according to item 1, even in the case where the actual worksite H and the environmental map information differ from each other because an environment such as the shape of the worksite H such as an agricultural field is changed by work, the updater 20c can update the portion of the environmental map information that relates to the area Ea having been worked by the working machine 1 using the sensing result obtained during the work.

(Item 2) The assist system S according to item 1, further including a position estimator 20a configured or programmed to estimate a position of the working machine 1 based on the sensing result from the one or more sensors 25 and based on the environmental map information updated by the updater 20c, wherein the position estimator 20a is configured or programmed to estimate the position based on a portion, of the sensing result obtained during work performed by the working machine 1, that relates to an area having not been worked by the working machine 1.

With the assist system S for a working machine 1 according to item 2, even in the case where the environment such as the shape of the worksite H is changed by work performed by the working machine 1, the accuracy of position estimation can be maintained because the environment in the area having not been worked is unlikely to change. Furthermore, the position can be estimated using the portion of the sensing result that relates to the area not used for update of the environmental map information. In other words, the sensing result from the sensor(s) 25 can be used for both position estimation and update of the environmental map information.

(Item 3) The assist system according to item 1 or 2, wherein the updater 20c is configured or programmed to perform the update process based on a portion, of the sensing result obtained during work performed by the working machine 1, that relates to an area on an opposite side of a working device 2 of the working machine 1 from an area ahead of the working device 1 in a direction of travel.

With the assist system S for a working machine 1 according to item 3, the environmental map information can be updated using a sensing result relating to the area having been passed and worked by the working machine 1, i.e., the area Ea having been worked by the working device 2. That is, even in the case where the environment such as the shape of the worksite H is changed by work performed by the working machine 1, the change of the environment can be reflected in the environmental map information.

(Item 4) The assist system S according to item 3, further including a position estimator 20a configured or programmed to estimate a position of the working machine 1 based on the sensing result from the one or more sensors 25 and based on the environmental map information updated by the updater 20c, wherein the position estimator 20a is configured or programmed to estimate the position based on a portion, of the sensing result obtained during work performed by the working machine 1, that relates to the area ahead of the working device 2 in the direction of travel.

With the assist system S for a working machine 1 according to item 4, the position estimator 20a can estimate the position based on environmental map information not differing from the actual worksite H, because the area ahead of the working machine 1 in the direction of travel is not yet worked by the working device 2 and therefore the environment therein is unlikely to have changed. It is therefore possible to maintain the accuracy of position estimation even in the case where the environment such as the shape of the worksite H is changed by work performed by the working machine 1.

(Item 5) The assist system S according to any one of items 1 to 4, wherein the updater 20c is configured or programmed to perform the update process according to the working device 2 attached to the working machine 1 and/or work performed by the working device 2.

With the assist system S for a working machine 1 according to item 5, the update process can be appropriately performed in accordance with the working device 2 and/or the work performed by the working device 2.

(Item 6) The assist system S according to item 5, wherein the updater 20c is configured or programmed to perform the update process in a case that the working device 2 performs work that possibly changes a shape of a worksite H, and not perform the update process in a case that the working device 2 performs work that does not change the shape of the worksite H.

With the assist system S for a working machine 1 according to item 6, since environmental map information not differing from the actual worksite(s) H because of the unchanged shape of the worksite(s) H does not require the update process, an unnecessary update process performed by the updater 20c can be prevented or reduced. This can reduce the processing load related to the update process of the updater 20c.

(Item 7) The assist system S according to any one of items 1 to 6, wherein the updater 20c is configured or programmed to perform the update process including a first process to determine a portion of the environmental map information that relates to an area Ea1 to be worked by the working machine 1, and a second process to re-register data for the portion (relating to the area Ea1) determined in the first process based on the sensing result.

With the assist system S for a working machine 1 according to item 7, the portion relating to the area Ea (Eal) of the environmental map information that may differ from the actual worksite H due to work performed by the working device 2 can be updated reliably.

(Item 8) The assist system S according to item 7, wherein the updater 20c is configured or programmed to perform the first process based on whether a working device 2 of the working machine 1 is in a working state in which the working device 2 performs work or in a non-working state in which the working device 2 does not perform work.

With the assist system S for a working machine 1 according to item 8, the portion of the environmental map information that relates to the area Ea worked by the working device 2 can be updated more reliably.

(Item 9) The assist system S according to item 8, wherein the updater 20c is configured or programmed to perform the first process when the working device 2 is in the working state, and not perform the first process when the working device 2 is in the non-working state.

With the assist system S for a working machine 1 according to item 9, the portion relating to the area Ea of the environmental map information that may differ from the actual worksite H due to work performed by the working device 2 can be updated more reliably. Furthermore, since the updater 20c does not perform the update process for the area that is not worked by the working device 2 and that therefore will not differ from the actual worksite H, i.e., the area for which the update of the environmental map information is not necessary, the processing load resulting from the update process of the updater 20c can be reduced.

(Item 10) The assist system S according to any one of items 7 to 9, wherein the updater 20c is configured or programmed to perform the first process including deleting data from the portion Ec of the environmental map information that relates to the area Ea1 to be worked by the working machine 1, and perform the second process including, based on the sensing result, re-registering data for the portion Ec of the environmental map information in which data deletion was performed in the first process.

With the assist system S for a working machine 1 according to item 10, the updater 20c deletes data from the portion of the environmental map information that relates to the area Ea1 to be worked by the working machine 1, i.e., the portion that relates to the area Ea that may differ from the actual worksite H, and therefore, for example, in the case where the position is estimated using the environmental map information, it is possible to eliminate or reduce the likelihood that the position estimation will be performed based on the environmental map information differing from the actual worksite H.

(Item 11) The assist system S according to any one of items 1 to 10, wherein the updater 20c is configured or programmed to, in a case that the working machine 1 travels back and forth between a first edge and a second edge of a worksite H, update the environmental map information upon each travel of the working machine 1 from one of the first edge and the second edge to the other.

With the assist system S for a working machine 1 according to item 11, the updater 20c can reliably update the portion of the environmental map information that relates to the area having been worked in the previous travel before the next travel.

(Item 12) The assist system S according to item 10, wherein the updater 20c is configured or programmed to, in a case that the working machine 1 travels back and forth between a first edge and a second edge of a worksite H, perform the first process including deleting data from the portion of the environmental map information that relates to the area Ea1 to be worked by the working machine 1 as the working machine 1 travels, and perform the second process upon each travel of the working machine 1 from one of the first edge and the second edge to the other.

With the assist system S for a working machine 1 according to item 12, the updater 20c deletes data from the portion of the environmental map information that relates to the area Ea1 to be worked by the working machine 1as the working machine 1 travels, and therefore it is possible to eliminate or reduce the likelihood that the position estimation will be performed based on the sensing result on the portion relating to the area Ea of the environmental map information where the shape has been changed by work. Furthermore, the updater 20c can reliably update the portion of the environmental map information that relates to the area having been worked by the previous travel before the next travel. Therefore, the position estimator 20a can estimate the position with improved accuracy.

(Item 13) The assist system S according to any one of items 1 to 12, further including a position estimator 20a configured or programmed to estimate a position of the working machine 1 based on the sensing result from the one or more sensors 25 and based on the environmental map information updated by the updater 20c, wherein the one or more sensors 25 include one or more ranging sensors to measure a distance to at least a portion of surroundings of the working machine 1, and the position estimator 20a is configured or programmed to estimate the position based on one or more ranging signals from the one or more ranging sensors, based on the environmental map information updated by the updater 20c, and based on a simultaneous localization and mapping (SLAM) algorithm.

With the assist system S for a working machine 1 according to item 13, it is possible to achieve highly accurate estimation of the position of the working machine 1 using SLAM.

(Item 14) The assist system S according to any one of items 1 to 13, further including a position estimator 20a configured or programmed to estimate a position of the working machine 1 based on the sensing result from the one or more sensors 25 and based on the environmental map information updated by the updater 20c, and a controller 20 configured or programmed to control travel of the working machine 1 based on the position of the working machine 1 estimated by the position estimator 20a.

With the assist system S for a working machine 1 according to item 14, it is possible to achieve highly accurate control of the travel of the working machine 1.

(Item 15) The assist system S according to any one of items 1 to 14, further including a position estimator 20a configured or programmed to estimate a position of the working machine 1 based on the sensing result from the one or more sensors 25 and based on the environmental map information updated by the updater 20c, and a display 15 to display the position of the working machine 1 estimated by the position estimator 20a.

With the assist system S for a working machine 1 according to item 15, a worker can more accurately know the position of the working machine 1.

(Item 16) A method of assisting a working machine 1, the method including a first step including causing one or more sensors 25 in or on a working machine 1 to sense a surrounding area of the working machine 1 to obtain a sensing result, the working machine 1 being operable to travel and work, and a second step including causing an updater 20c to update environmental map information based on a portion, of the sensing result obtained by the one or more sensors 25 in the first step, that relates to an area Ea having been worked by the working machine.

With the method of assisting a working machine 1 according to item 16, even in the case where the actual worksite H and the environmental map information differ because an environment such as the shape of the worksite H such as an agricultural field is changed by work, the updater 20c can update the portion of the environmental map information that relates to the area Ea having been worked by the working machine 1 using the sensing result obtained during the work.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An assist system (S) for a working machine (1), comprising:
one or more sensors (25) provided in or on a working machine (1) to sense a surrounding area of the working machine (1) to obtain a sensing result, the working machine (1) being configured to perform work while traveling; and
an updater (20c) configured or programmed to perform an update process to update environmental map information based on a portion, of the sensing result obtained during work performed by the working machine (1), that relates to an area (Ea) having been worked by the working machine (1).

2. The assist system (S) according to claim 1, further comprising a position estimator (20a) configured or programmed to estimate a position of the working machine (1) based on the sensing result from the one or more sensors (25) and based on the environmental map information updated by the updater (20c); wherein
the position estimator (20a) is configured or programmed to estimate the position based on a portion, of the sensing result obtained during work performed by the working machine (1), that relates to an area having not been worked by the working machine (1).

3. The assist system (S) according to claim 1 or 2, wherein the updater (20c) is configured or programmed to perform the update process based on a portion, of the sensing result obtained during work performed by the working machine (1), that relates to an area on an opposite side of a working device (2) of the working machine (1) from an area ahead of the working device (2) in a direction of travel.

4. The assist system (S) according to claim 3, further comprising a position estimator (20a) configured or programmed to estimate a position of the working machine (1) based on the sensing result from the one or more sensors (25) and based on the environmental map information updated by the updater (20c); wherein
the position estimator (20a) is configured or programmed to estimate the position based on a portion, of the sensing result obtained during work performed by the working machine (1), that relates to the area ahead of the working device (2) in the direction of travel.

5. The assist system (S) according to any one of claims 1 to 4, wherein
the updater (20c) is configured or programmed to perform the update process according to the working device (2) attached to the working machine (1) and/or work performed by the working device (2);
preferably, the updater (20c) is configured or programmed to:
perform the update process in a case that the working device (2) performs work that possibly changes a shape of a worksite (H); and
not perform the update process in a case that the working device (2) performs work that does not change the shape of the worksite (H).

6. The assist system (S) according to any one of claims 1 to 5, wherein the updater (20c) is configured or programmed to perform the update process including:
a first process to determine a portion of the environmental map information that relates to an area (Ea1) to be worked by the working machine (1); and
a second process to re-register data for the portion determined in the first process based on the sensing result.

7. The assist system (S) according to claim 6, wherein the updater (20c) is configured or programmed to perform the first process based on whether a working device (2) of the working machine (1) is in a working state in which the working device (2) performs work or in a non-working state in which the working device (2) does not perform work.

8. The assist system (S) according to claim 7, wherein the updater (20c) is configured or programmed to perform the first process when the working device (2) is in the working state, and not perform the first process when the working device (2) is in the non-working state.

9. The assist system (S) according to any one of claims 6 to 8, wherein the updater (20c) is configured or programmed to:
perform the first process including deleting data from the portion (Ec) of the environmental map information that relates to the area (Ea1) to be worked by the working machine (1); and
perform the second process including, based on the sensing result, re-registering data for the portion (Ec) of the environmental map information in which data deletion was performed in the first process.

10. The assist system (S) according to any one of claims 1 to 9, wherein the updater (20c) is configured or programmed to, in a case that the working machine (1) travels back and forth between a first edge and a second edge of a worksite (H), update the environmental map information upon each travel of the working machine (1) from one of the first edge and the second edge to the other.

11. The assist system (S) according to claim 9, wherein the updater (20c) is configured or programmed to, in a case that the working machine (1) travels back and forth between a first edge and a second edge of a worksite (H):
perform the first process including deleting data from the portion of the environmental map information that relates to the area (Ea1) to be worked by the working machine (1) as the working machine (1) travels; and
perform the second process upon each travel of the working machine (1) from one of the first edge and the second edge to the other.

12. The assist system (S) according to any one of claims 1 to 11, further comprising:
a position estimator (20a) configured or programmed to estimate a position of the working machine (1) based on the sensing result from the one or more sensors (25) and based on the environmental map information updated by the updater (20c); wherein
the one or more sensors (25) include one or more ranging sensors to measure a distance to at least a portion of surroundings of the working machine (1); and
the position estimator (20a) is configured or programmed to estimate the position based on one or more ranging signals from the one or more ranging sensors, based on the environmental map information updated by the updater (20c), and based on a simultaneous localization and mapping (SLAM) algorithm.

13. The assist system (S) according to any one of claims 1 to 12, further comprising:
a position estimator (20a) configured or programmed to estimate a position of the working machine (1) based on the sensing result from the one or more sensors (25) and based on the environmental map information updated by the updater (20c); and
a controller (20) configured or programmed to control travel of the working machine (1) based on the position of the working machine estimated by the position estimator (20a).

14. The assist system (S) according to any one of claims 1 to 13, further comprising:
a position estimator (20a) configured or programmed to estimate a position of the working machine (1) based on the sensing result from the one or more sensors (25) and based on the environmental map information updated by the updater (20a); and
a display (15) to display the position of the working machine (1) estimated by the position estimator (20a).

15. A method of assisting a working machine (1), the method comprising:
a first step including causing one or more sensors (25) in or on a working machine (1) to sense a surrounding area of the working machine (1) to obtain a sensing result, the working machine (1) being operable to travel and work; and
a second step including causing an updater (20c) to update environmental map information based on a portion, of the sensing result obtained by the one or more sensors (25) in the first step, that relates to an area having been worked by the working machine (1).
